# FASCICULE DE BREVET EUROPEEN

(11) **EP 1 033 469 B1**
(45) Date de publication et mention de la délivrance du brevet: **14.04.2004**
(21) Numéro de dépôt: 00400410.7
(22) Date de dépôt: 11.02.2000
(51) Int. Cl.: E06B 9/76, F16D 1/06

(54) **Dispositif permettant l'assemblage d'une manivelle de manoeuvre de volet roulant au bloc de sortie de caisson**
Vorrichtung zum Verbinden eines Kurbelantriebes mit einem Durchführungselement eines Rolladenkastens
Mounting of a crank handle in a mounting block, said mounting block being integrated in a shutter box

(30) Priorité: 02.03.1999 FR 9902577
(43) Date de publication de la demande: 06.09.2000
(73) Titulaire: Zurfluh Feller, 25150 Roide (FR)
(72) Inventeur: Steinbauer, Thierry, 90000 Belfort (FR); Allemand, Jean-Marie, 25190 Villars sous Dampjoux (FR)
(74) Mandataire: Peaucelle, Chantal

(56) Documents cités:
- DE-A- 19 807 049

## Description

La présente invention est relative à un perfectionnement apporté aux sorties de caissons de volets roulant. Les sorties de caissons de volets roulants permettent d'assurer la liaison mécanique entre l'axe d'enroulement du tablier du volet roulant et le treuil qui lui est éventuellement connecté et la manivelle située à l'extérieur du caisson qui est nécessaire pour commander la montée ou la descente du tablier.

De plus en plus, dans un souci de rationalisation des moyens de production et d'économie en termes de mise en oeuvre, les caissons de volet roulant sont préfabriqués et préassemblés en atelier, dans une configuration qui est très proche de celle devant se trouver lors de la pose finale.

Ces caissons sont conditionnés de manière à pouvoir être transportés sur le chantier.

Un des gros inconvénients des caissons de volet roulant ainsi conditionnés consiste essentiellement dans leur encombrement. Généralement, ceux-ci sont de forme globalement parallélépipédique et lorsque le bloc guide genouillère - cette pièce est en fait un cardan qui traverse la sortie de caisson et qui relie l'axe du tablier ou du treuil à l'axe de la manivelle - est assemblé au bloc de sortie de caisson, il crée un appendice qui, d'une part nuit au conditionnement du caisson de volet roulant ainsi équipé et d'autre part risque d'être endommagé dans le transport. Un dispositif permettant l'assemblage d'une manivelle de manoeuvre au bloc de sortie de caisson, le dispositif comprenant une genouillère de forme compliquée est decri dans DE 19807049 A.

La présente invention vise donc à pallier ces inconvénients, en proposant un perfectionnement apporté au bloc de sortie de caisson, qui permette un conditionnement aisé d'une pluralité de caissons de volet roulant, sans risque d'endommagement de celui-ci.

A cet effet, le dispositif permettant l'assemblage d'une manivelle de manoeuvre de volet roulant au bloc de sortie de caisson pourvu d'une rotule, le dispositif comprenant une genouillère assemblée à une tige et à un manchon d'adaptation grâce à un organe d'immobilisation, se caractérise en ce qu'une première partie du manchon d'adaptation coulisse au sein d'un orifice pratiqué dans la genouillère de façon à permettre un déplacement relatif entre des parties en saillie formées à l'extrémité de pattes flexibles constituant une seconde partie du manchon et une zone décolletée formée sur la tige.

D'autres caractéristiques et avantages de la présente invention ressortiront de la description faite ci-après, en référence aux dessins annexés qui en illustrent un exemple de réalisation dépourvu de tout caractère limitatif. Sur les figures :

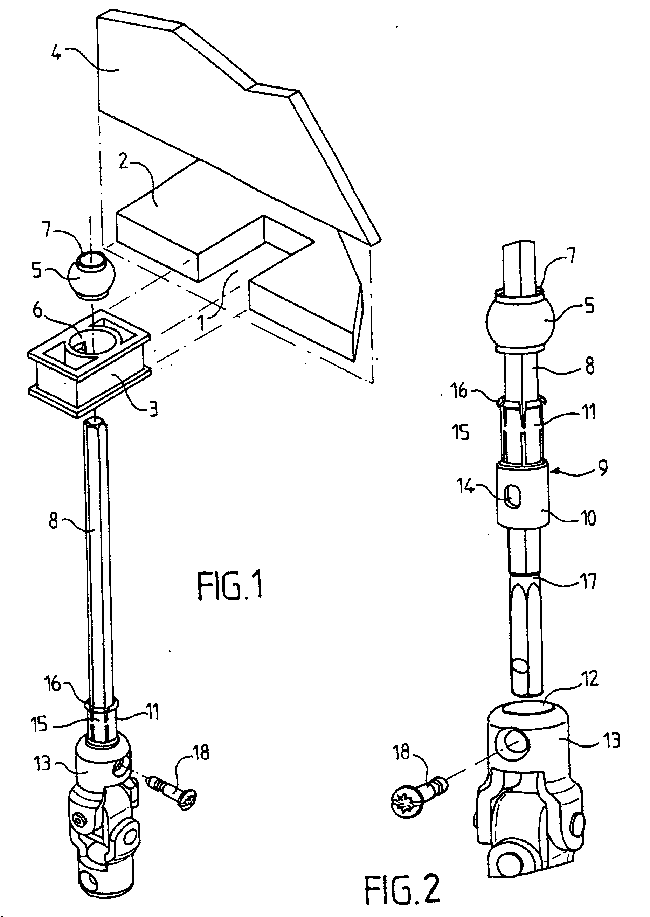

- la figure 1 est une vue en perspective de l'ensemble des pièces constituant la sortie de caisson objet de l'invention ;
- la figure 2 est une vue en perspective montrant les différents éléments en éclaté ;
- la figure 3 est une vue en coupe illustrant la configuration du dispositif après clippage au sein du bâti de sortie de caisson ;
- la figure 4 est une vue en coupe illustrant la configuration du dispositif avant clippage.

Selon un mode préféré de réalisation, on pratique une ouverture 1 ou une encoche dans la planche de sous-face 2 d'un caisson de volet roulant, cette encoche 1 permettant l'immobilisation d'un bâti de sortie de caisson 3 de volet roulant, entre deux épaulements réalisés de part et d'autre du bâti, l'arrêt en translation dans la direction axiale étant assuré par exemple par l'embout 4 de coffre en extrémité de planche.

Un autre principe de fixation du bâti de sortie de caisson peut consister en la réalisation d'un trou dans la planche de sous-face du caisson, le bâti de sortie de caisson venant alors se clipper dans ce trou, des petits ergots s'escamotant lors du passage dans l'orifice pratiqué dans la planche, puis se déployant ensuite pour l'immobilisation.

Tout autre mode de fixation équivalent permettant d'immobiliser le bâti de sortie de caisson peut être envisagé, il convient cependant que le dispositif permettant l'immobilisation de ce bâti ne nuise pas au conditionnement du caisson.

Quel que soit le mode de fixation envisagé, le bloc de sortie de caisson 3 comporte une rotule 5 qui est immobilisée au sein d'une cavité sphérique 6 réalisée dans ce bloc de sortie de caisson 3.

Selon un mode préféré de réalisation, un orifice 7 pratiqué dans la rotule 5 autorise le passage, d'une part d'une tige 8 notamment de six pans, et d'autre part d'un manchon 9 d'adaptation dont le rôle sera précisé ci-après.

Selon une autre caractéristique, le manchon 9 d'adaptation est une pièce, notamment en matière plastique ou métallique (zamac...), de forme globalement cylindrique, obtenue par une série d'opérations de décolletage ou de moulage et comporte essentiellement deux parties 10, 11.

La première partie 10 est munie d'un alésage cylindrique qui coopère au niveau d'un orifice 12 pratiqué dans une genouillère 13, et l'ajustement entre cette partie 10 cylindrique et l'orifice 12 de la genouillère 13 est calculé de telle façon qu'il autorise un mouvement relatif de translation entre ces deux pièces.

Selon une autre caractéristique de ce manchon 9 d'adaptation, la partie cylindrique 10 comporte un orifice 14 transversal oblong.

La seconde partie 11 du manchon 9 d'adaptation comporte une pluralité de pattes flexibles 15 délimitant globalement un cylindre et dont les extrémités libres sont pourvues de parois 16 en saillie qui peuvent se rétracter, en raison de la souplesse des pattes 15, lorsque celles-ci sont introduites au sein de l'orifice 7 pratiqué dans la rotule 5.

Selon encore une autre caractéristique de l'invention, la tige 8 de section droite transversale, notamment hexagonale, comporte au regard de la zone de flexibilité de l'extrémité des pattes 15 formant la deuxième partie 11 du manchon 9 d'adaptation, une zone décolletée 17 en creux qui permet la pénétration des parois en saillie, lors du montage de l'ensemble constitué de la genouillère 13 du manchon 9 d'adaptation et de la tige 8 au sein de la rotule 5, emprisonnée dans le bâti de sortie de caisson 3.

Afin d'immobiliser axialement l'ensemble de ces pièces, on prévoit que la genouillère 13, la tige 8 et le manchon 9 d'adaptation disposent d'orifices coaxiaux pour le passage d'un organe d'immobilisation 18, notamment du type vis, clavette, goupille ou équivalent.

Le mode de montage est donc le suivant :
- le bâti de sortie de caisson 3 est immobilisé avec sa rotule 5 au sein d'une encoche 1 pratiquée sur la planche 2 de sous-face d'un caisson de volet roulant ;
- la genouillère 13, le manchon 9 d'adaptation, la tringle 8 sont assemblés parallèlement et emboîtés les uns dans les autres, et solidarisés à l'aide de l'organe d'immobilisation 18. Dans cette configuration, les parois en saillie 16 formées à l'extrémité des pattes flexibles 15 de la seconde partie 11 du manchon 9 d'adaptation se positionnent en regard de la zone décolletée 17 réalisée sur la tige 8.

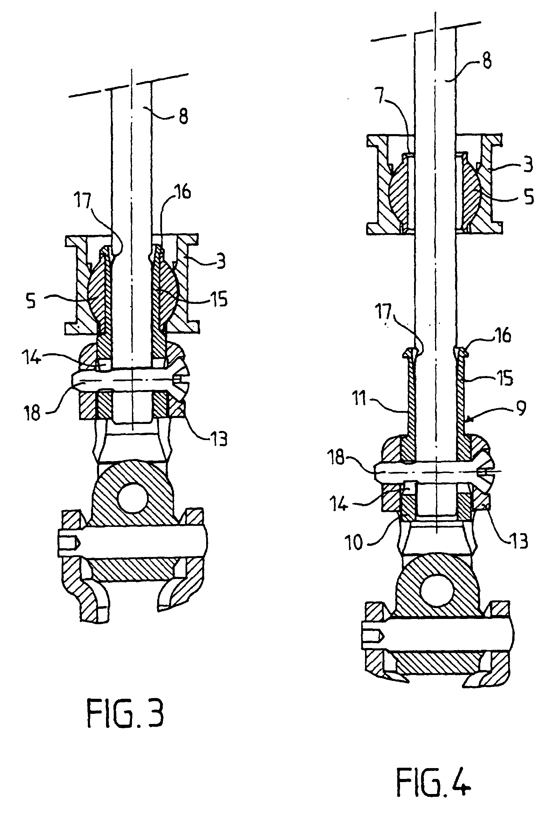

En raison de l'ajustement glissant entre la paroi externe de la première partie 10 du manchon 9 d'adaptation et l'orifice 12 pratiqué dans la genouillère 13 (cf. figure 4), l'organe d'immobilisation 18 s'appuie en partie haute du trou oblong 14 du manchon 9 et la zone décolletée 17 réalisée sur la tige 8 permet l'emboîtement de l'extrémité 16 des pattes flexibles 15, ce qui autorise une diminution du diamètre de l'extrémité du manchon 9 d'adaptation et son passage au sein de l'orifice 7 de la rotule 5.

Lorsque la seconde partie 11 du manchon 9 d'adaptation a totalement traversé l'orifice 7 de la rotule 5, l'extrémité 16 des pattes flexibles 15 se déploie et immobilise en translation le manchon 9 d'adaptation au sein du bâti de sortie de caisson 3, ainsi que les pièces qui y sont reliées (tringle 8 et genouillère 13).

La seconde partie 11 du manchon d'adaptation 9 correspond sensiblement à la longueur d'un orifice 7 pratiqué dans la rotule 5.

En raison du propre poids de l'ensemble formant la manivelle, ou lors d'un effort de traction vers le bas, l'organe d'immobilisation 18 (cf. figure 3) s'appuie en partie basse du trou oblong 14, entraînant en même temps la tringle 8 vers le bas et décalant la position relative entre l'extrémité 16 des pattes flexibles 15 et la zone décolletée 17 présente sur la tringle 8, empêchant ainsi tout démontage intempestif.

La présente invention telle que décrite précédemment offre de multiples avantages, en raison principalement du fait que le caisson de volet roulant et sa sortie de caisson peuvent être conditionnés indépendamment du système de manoeuvre, qui peut lui être connecté directement sur le chantier par une opération très rapide d'emboîtage, le montage étant quasiment irréversible ou du moins difficilement démontable sans le recours à des outils et des opérations délicates.

Il demeure bien entendu que la présente invention n'est pas limitée aux exemples de réalisation décrits et représentés ci-dessus, mais qu'elle en englobe toutes les variantes comprises dans le cadre défini par les revendications suivantes.

## Revendications

1. Dispositif permettant l'assemblage d'une manivelle de manoeuvre de volet roulant au bloc de sortie de caisson (3), ledit bloc étant pourvu d'une rotule (5), ledit dispositif comprenant une genouillère (13) assemblée à une tige (8) et à un manchon (9) d'adaptation grâce à un organe d'immobilisation (18), **caractérisé en ce qu'**une première partie (10) du manchon (9) d'adaptation coulisse au sein d'un orifice (12) pratiqué dans la genouillère (13) de façon à permettre un déplacement relatif entre des parties en saillie (16) formées à l'extrémité de pattes flexibles (15) constituant une seconde partie (11) du manchon (9) et une zone décolletée (17) formée sur la tige (8).

2. Dispositif selon la revendication 1, **caractérisé en ce que** la première partie (10) du manchon (9) d'adaptation comporte un orifice (14) de forme oblongue.

3. Dispositif selon l'une quelconque des revendications précédentes, **caractérisé en ce que** la seconde partie (11) du manchon d'adaptation (9) correspond sensiblement à la longueur d'un orifice (7) pratiqué dans la rotule (5).

4. Dispositif selon l'une quelconque des revendications précédentes, **caractérisé en ce que** l'ajustement entre la surface externe de la première partie (10) du manchon (9) d'adaptation et l'orifice (12) pratiqué dans la genouillère (13) est glissant.

5. Dispositif selon l'une des revendications 2 à 4, **caractérisé en ce que** les parties en saillie (16) sont positionnées en regard de la zone décolletée (17) afin d'assurer le montage du manchon (9) d'adaptation au sein de la rotule (5), et **en ce que** la zone décolletée (17) de la tige (8) se déplace d'une longueur correspondante à celle de l'orifice (14) afin de permettre l'ouverture des parties en saillie (16) et d'éviter le démontage du manchon (9) d'adaptation de la rotule (5).

## Claims

1. Device for connecting the control crank of a roller shutter to the casing output block (3), said block being provided with a ball (5), said device comprising a toggle joint (13) connected to a rod (8) and to an adjustment sleeve (9) by means of an immobilizing member (18), **characterized in that** a first part (10) of the adjustment sleeve (9) slides inside an orifice (12) formed in the toggle joint (13) so as to permit a relative displacement between projecting parts (16), formed at the end of flexible tabs (15) constituting a second part (11) of the sleeve (9), and a recessed zone (17) formed on the rod (8).

2. Device according to Claim 1, **characterized in that** the first part (10) of the adjustment sleeve (9) comprises an orifice (14) of oblong shape.

3. Device according to either one of the preceding claims, **characterized in that** the second part (11) of the adjustment sleeve (9) corresponds substantially to the length of an orifice (7) formed in the ball (5).

4. Device according to any one of the preceding claims, **characterized in that** the adjustment between the outer surface of the first part (10) of the adjustment sleeve (9) and the orifice (12) formed in the toggle joint (13) is a sliding adjustment.

5. Device according to one of Claims 2 to 4, **characterized in that** the projecting parts (16) are positioned opposite the recessed zone (17) in order to ensure mounting of the adjustment sleeve (9) inside the ball (5), and **in that** the recessed zone (17) of the rod (8) moves by a length corresponding to that of the orifice (14) in order to permit opening of the projecting parts (16) and to avoid dismantling the adjustment sleeve (9) from the ball (5).

## Patentansprüche

1. Vorrichtung, welche die Verbindung einer Rollladen-Kurbelstange mit dem Ausgangselement (3) eines Rollladenkastens ermöglicht, wobei dieses Ausgangselement mit einem Kugelgelenk (5) versehen ist und die Vorrichtung ein Kniegelenk (13) umfasst, das durch ein Arretiermittel (18) mit einer Stange (8) und einer Anpassungsmuffe (9) verbunden ist, **dadurch gekennzeichnet, dass** ein erster Teil (10) der Anpassungsmuffe (9) in einer Öffnung (12) hin- und hergleitet, welche im Kniegelenk (13) derart angebracht ist, dass sie eine Relativbewegung zwischen den überstehenden Teilen (16), die am Ende von flexiblen Laschen (15) ausgebildet sind, die einen zweiten Teil (11) der Muffe (9) bilden, und einem auf der Stange (8) ausgebildeten gedrehten Bereich (17) erlaubt.

2. Vorrichtung nach Anspruch 1, **dadurch gekennzeichnet, dass** der erste Teil (10) der Anpassungsmuffe (9) eine Öffnung (14) in Form eines Langlochs enthält.

3. Vorrichtung nach einem der vorhergehenden Ansprüche, **dadurch gekennzeichnet, dass** der zweite Teil (11) der Anpassungsmuffe (9) im Wesentlichen der Länge einer im Kugelgelenk (5) angebrachten Öffnung (7) entspricht.

4. Vorrichtung nach einem der vorhergehenden Ansprüche, **dadurch gekennzeichnet, dass** die Passung zwischen der Außenfläche des ersten Teils (10) der Anpassungsmuffe (9) und der im Kniegelenk (13) angebrachten Öffnung (12) gleitend ist.

5. Vorrichtung nach einem der Ansprüche 2 bis 4, **dadurch gekennzeichnet, dass** die überstehenden Teile (16) gegenüber dem gedrehten Bereich (17) angeordnet werden, um die Anbringung der Anpassungsmuffe (9) im Kugelgelenk (5) sicherzustellen, und dass sich der gedrehte Bereich (17) der Stange (8) um eine Länge bewegt, die derjenigen der Öffnung (14) entspricht, um die Öffnung der überstehenden Teile (16) zu erlauben und das Lösen der Anpassungsmuffe (9) vom Kugelgelenk (5) zu verhindern.
